# EUROPEAN PATENT SPECIFICATION

(11) **EP 4 080 169 B1**
(45) Date of publication and mention of the grant of the patent: **21.02.2024**
(21) Application number: 22165800.8
(22) Date of filing: 31.03.2022
(51) Int. Cl.: G02B 6/36, G02B 6/42, G01D 5/353, G02B 6/02

(54) **OPTICAL FIBER INSTALLATION TOOL**
FASEROPTISCHES INSTALLATIONSWERKZEUG
OUTIL D'INSTALLATION DE FIBRE OPTIQUE

(30) Priority: 20.04.2021 US 202117235287
(43) Date of publication of application: 26.10.2022
(73) Proprietor: Palo Alto Research Center Incorporated, Webster, NY 14580 (US)
(72) Inventor: CHEN, Qiushu, Palo Alto, 94304 (US); CHAMOUN, Jacob N, Palo Alto, 94304 (US); KIESEL, Peter, Palo Alto, 94304 (US)
(74) Representative: Gill Jennings & Every LLP

(56) References cited:
- EP-A1- 2 247 971
- CN-A- 108 508 561
- DE-T2- 69 614 586
- US-A1- 2020 292 774

## Description

### BACKGROUND

Fiber optic (FO) sensors can be used for detecting parameters such as strain, temperature, pressure, current, voltage, chemical composition, and vibration. FO sensors are attractive components because they are thin, lightweight, sensitive, robust to harsh environments, and immune to electromagnetic interference (EMI) and electrostatic discharge. FO sensors can be arranged to simultaneously measure multiple parameters distributed in space with high sensitivity in multiplexed configurations over long optical fiber cables. One example of how this can be achieved is through fiber Bragg grating (FBG) sensors. A FBG sensor is formed by a periodic modulation of the refractive index along a finite length (typically a few mm) of the core of an optical fiber. This pattern reflects a wavelength, called the Bragg wavelength, determined by the periodicity of the refractive index profile. The Bragg wavelength is sensitive to external stimulus (strain and/or temperature, etc.) that changes the periodicity of the grating and/or the index of refraction of the fiber. Thus, FBG sensors rely on the detection of small wavelength changes in response to stimuli of interest. In some implementations, FO sensors can be attached to structures and operated to detect one or more parameters, e.g., strain, temperature, vibration. The disclosed approaches facilitate deployment of optical fibers and FO optic sensors on various types of structures, e.g., bridges, roadways, railways, and electrical devices such as transformers, to monitor the structural health of the structures.

US 2020/292774 relates to installation of small form factor fibers at user premises.

DE 696 14 586 relates to an automatic assembly and inspection system for assembling optical connectors having an optical strand or optical strands contained in an optical cable/

CN 108 508 561 relates to an optical fiber installation device and a vehicle lamp assembly system.

EP 2 247 971 relates to a method a means for mounting a fibre Bragg grating on a surface.

### SUMMARY

According to an aspect of the invention, there is provided an apparatus according to accompanying claim 1.

According to another aspect of the invention, there is provided a method according to accompanying claim 10.

Embodiments described herein involve an apparatus, comprising an installation tool for attaching an optical fiber to a structure. The tool comprises a body. One or more contact portions are supported by the body and configured to secure the optical fiber. An adhesive dispenser is disposed proximate the body. The adhesive dispenser is configured to dispense at least one adhesive to the optical fiber and the structure. A dispenser controller is operatively coupled to the adhesive dispenser. The dispenser controller is configured to control the adhesive dispenser.

Embodiments involve a method of operating an optical fiber installation tool. The method comprises securing an optical fiber between two contact portions of the installation tool. The optical fiber is pre-strained to a predetermined pre-strain value. A first adhesive is dispensed to one or more locations on the optical fiber. A second adhesive is dispensed to at least one location on the optical fiber. The first adhesive is relatively fast-bonding compared to the second adhesive.

### BRIEF DESCRIPTION OF THE DRAWINGS

Throughout the specification reference is made to the appended drawings wherein:
FIG. 1 is a block diagram that conceptually illustrates components of an optical fiber installation tool configured to adhesively mount an optical fiber to the surface of a structure in accordance with some embodiments;
FIG. 2 is a more detailed block diagram conceptually illustrating components of an installation tool in accordance with some embodiments;
FIG. 3 is a block diagram of an installation tool that includes a central controller configured to primarily control the operations of the installation tool in accordance with some embodiments;
FIG. 4 is a conceptual diagram that provides a perspective view of an installation tool in accordance with some embodiments;
FIG. 5A provides a view of an installation device in accordance with some embodiments from the perspective of looking at the installation device normal to the bottom surface of the contact portions;
FIG. 5B illustrates a contact portion comprising a clamp in accordance with some embodiments;
FIG. 5C illustrates a contact portion comprising a switchable adhesive in accordance with some embodiments;
FIG. 5D illustrates a contact portion that secures the optical fiber by magnetic force in accordance with some embodiments;
FIG. 5E illustrates a contact portion that secures the optical fiber 550 by spring force in accordance with some embodiments;
FIG. 5F illustrates a contact portion that secures the optical fiber by force exerted by an electromagnetic solenoid in accordance with some embodiments;
FIGS. 6A and 6B are diagrams that illustrate a process operating the installation tool 600 to dispense adhesive in accordance with some embodiments;
FIG. 7A illustrates contact portions and an optical fiber after a first adhesive has been dispensed in accordance with some embodiments;
FIG. 7B illustrates contact portions and an optical fiber after first and second adhesives have been dispensed in accordance with some embodiments;
FIG. 8A illustrates the installation tool of FIG. 6A in the process of curing the adhesive in accordance with some embodiments;
FIG. 8B shows the adhesive after of FIG. 8A after curing;
FIGS. 9 and 10 show configurations of the installation tool from the perspective of looking at the installation device from the bottom of the contact portions in accordance with embodiments described herein;
FIG. 11 is a flow diagram illustrating a process for installing an optical fiber onto a structure in accordance with some embodiments; and
FIG. 12 is a flow diagram illustrating a process for installing an optical fiber comprising an FO sensor in accordance with some embodiments.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

Embodiments disclosed herein involve an optical fiber installation tool and related optical fiber installation processes that enable safe and reliable installation of optical fibers that may include FO sensors, especially FBG sensors. Challenges associated with reliably mounting FO sensors to a structure include (1) the optical fiber segment containing the FO sensor at a sensing point should be held at a defined pre-strain value in order to operate properly after installation; (2) the installation should be simple and capable of rapidly and repeatably installing optical fiber; (3) the installation should be non-invasive to the structure; and (4) to increase system robustness, the installation process should be capable of installing both bare optical fiber and optical fiber comprising FO sensors.

The embodiments include methods and systems for mounting FO sensors to the structures in such a way that strain from the structures is transmitted to the sensors. The approaches are flexible enough to attach the FO sensors to a variety of different substrates e.g. concrete, metal, and wood. Repeatability of the attachment is desired so that at least some or most of the FO sensors have the same pre-strain once attached. The disclosed attachment approaches can be simple and rapid to perform to facilitate the deployment of multiple FO sensors on a structure. The use of an adhesive attachment approach obviates the need to drill holes in the structure or weld anything onto the structure.

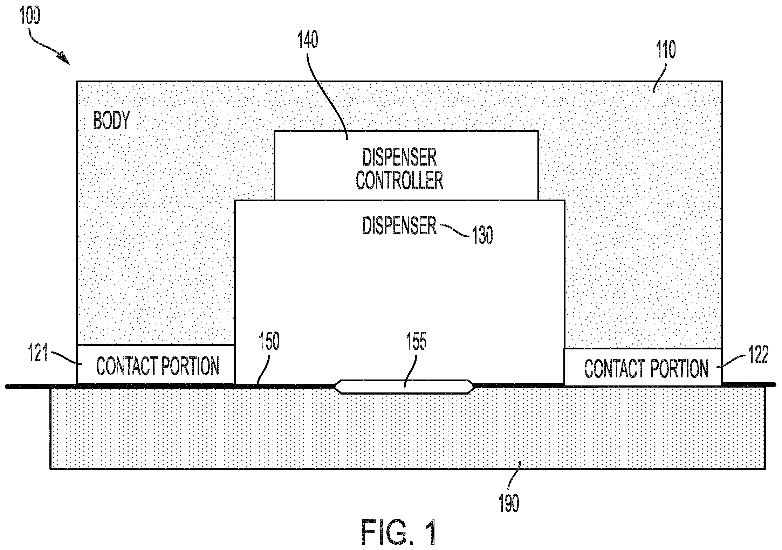

FIG. 1 is a block diagram that conceptually illustrates components of an optical fiber installation tool 100 configured to adhesively mount an optical fiber 150 to the surface of a structure 190. The installation tool 100 comprises a body 110 and one or more contact portions 121, 122 supported by the body 110 and configured to secure the optical fiber 150. As shown in FIG. 1, in some implementations, the optical fiber 150 being mounted to the structure 190 may include an FO sensor 155 disposed on the optical fiber 150. The apparatus further includes an adhesive dispenser 130 supported by the body 110. The adhesive dispenser 130 is capable of dispensing at least one adhesive. A dispenser controller 140 is operatively coupled to the adhesive dispenser 130 and configured to control the adhesive dispenser 130 to dispense the adhesive to the optical fiber 150 and/or the structure 190.

According to some aspects, the contact portions 121, 122 may comprise clamps having opposing jaws configured to clamp the optical fiber 150 between the jaws. According to some aspects, the contact portions 121, 122 may comprise a switchable adhesive that secures the optical fiber 150. According to some aspects, the contact portions 121, 122 may comprise magnets or springs that secure the optical fiber between the contact portions and the structure, e.g., by applying a force that presses the optical fiber 150 against the surface of the structure 190.

The adhesive dispenser 130 can be configured to dispense adhesive to one or more locations of the optical fiber 150 and/or the structure 190. The installation tool 100 can be configured such that the adhesive dispenser 130 dispenses the adhesive to the optical fiber 150 and/or the structure 190 after the optical fiber 150 is in contact with the structure 190. The adhesive dispenser 130 may be configured to dispense adhesive to multiple locations of the optical fiber 150 and/or structure 190. The adhesives dispensed may comprise one or more of an adhesive tape, a flowable adhesive a pressure sensitive adhesive, a heat sensitive adhesive, a curable adhesive, an epoxy, etc.

A dispenser controller 140 can be operatively connected to the adhesive dispenser 130 and configured to control the adhesive dispenser 130. For example, the dispenser controller 140 may control the timing, type, and/or amount of adhesive dispensed to one or multiple locations of the optical fiber 150. The dispenser controller 140 may provide a predetermined amount of adhesive. In some implementations the dispenser controller 140 controls the adhesive dispenser 130 such that a first adhesive is dispensed to one or more first locations of the optical fiber 150 and a second adhesive is dispensed to one or more second locations of the optical fiber 150 and/or structure 190.

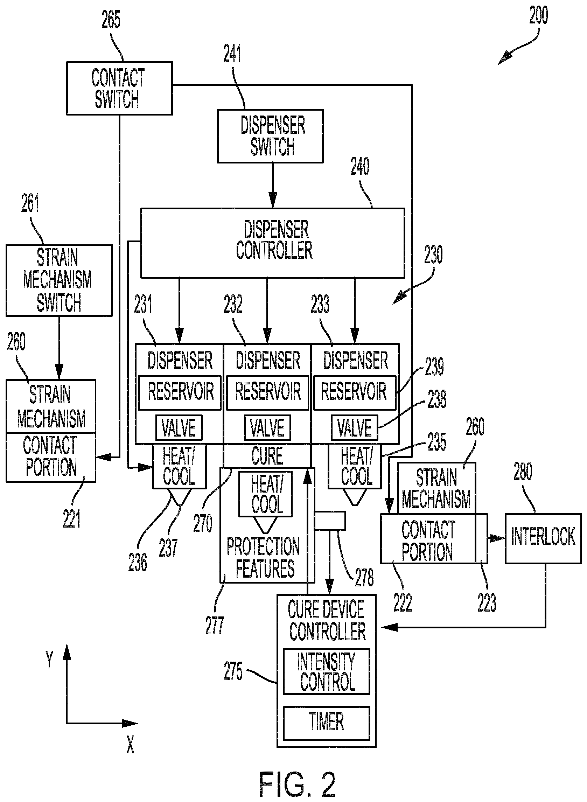

FIG. 2 is a more detailed block diagram conceptually illustrating components of an installation tool 200 configured to install an optical fiber on a surface in accordance with some embodiments. As previously discussed, the installation tool 200 includes one or more contact portions 221, 222 configured to hold the optical fiber as previously discussed (not shown in FIG. 2, but see element 150 of FIG. 1). The contact portions 221, 222 may comprise clamps having opposing jaws that are configured to clamp the optical fiber between the jaws and to hold the optical fiber against the surface of the structure. The contact portions 221, 222 can comprise a switchable adhesive. The contact portions 221, 222 may comprise magnets or springs configured to bias the optical fiber against the surface of the structure.

An optional contact switch 265 can be actuated to switch the contact portions 121, 122 from an "OFF" state to an "ON" state. When in the ON state, the switchable contact portions 221, 222 secure the optical fiber and when in the OFF state, the switchable contact portions 221, 222 release the optical fiber. For example, the switchable contact portions 221, 222 may comprise one or more of a switchable clamp and a switchable adhesive. A switchable clamp may be switched ON state to hold the optical fiber and OFF state to release the optical fiber using electromagnets, solenoids, and/or by mechanically stretching or relaxing springs, for example. A switchable adhesive may be switched ON or OFF to hold or release the optical fiber 550 depending on a switch input. The switch input for the switchable adhesive can include mechanical, electromagnetic, fluidic, or thermal stimuli. Switchable adhesives are described, for example, in U.S. Patent Application Publication 2020/0385614 and elsewhere. The contact switch 265 may actuated to switch the clamp or switchable adhesive to the ON or OFF states.

The optical fiber and/or FO sensor are pre-strained before installation on the structure. The installation tool 200 includes a strain mechanism 260 configured work in conjunction with the contact portions 221, 222 to impart a predetermined amount of pre-strain to the optical fiber. During a time that the optical fiber is secured by the contact portions 221, 222, the strain mechanism 260 is configured to move one or both of the contact portions 221, 222 along the x-axis to impart the predetermined amount of pre-strain to the optical fiber and/or FO sensor. According to some implementations, the installation tool 200 includes a strain mechanism switch 261. Actuating the strain mechanism switch 261 causes the strain mechanism 260 to strain the optical fiber to the pre-strain value. A tool that can be used to pre-strain the optical fiber is described in further detail in U.S. App. No. 17/235,101.

Depicted in FIG. 2, the optical fiber installation tool 200 can include multiple adhesive dispensers 231, 232, 233. The adhesive dispensers 231, 232, 233 may be configured to dispense the same type of adhesive or to dispense different types of adhesive. For example, a first one or more dispensers 231, 233 may dispense a temporary or fast bonding adhesive and at least one second dispenser 232 may dispense a permanent or slow bonding adhesive. The temporary adhesive may form a bond with weaker bond strength when compared to the bond formed by the permanent adhesive. A fast-bonding adhesive may form a bond in a shorter period of time compared to the period of time needed for the slow-bonding adhesive to form the permanent bond. At least some of the dispensers can dispense flowable, curable adhesive, for example. In some embodiments, at least one of the adhesive dispensers 231, 232, 233 may dispense a curable adhesive. The curable adhesive may be cured by exposure to curing energy such as heat, ultraviolet (UV) radiation, visible light, etc., and/or through a chemical reaction.

The installation tool 200 includes a dispenser controller 240 that controls the operation of the dispensers 231, 232, 233. In some implementations, the dispenser controller 240 can separately control each of the adhesive dispensers 231, 232, 233 so as to control the timing and/or amount of adhesive dispensed, for example. In some implementations each dispenser 231, 232, 233 includes a reservoir 239 configured to contain flowable adhesive and a valve 238 that allows the flowable adhesive to flow through an opening 237 in the reservoir 239 onto the structure and/or optical fiber. The dispenser controller 240 can be configured to operate the valve 238 that allows a flowable adhesive flow through the opening. According to some implementations, the dispenser comprises a nozzle 236 that includes the opening 237, wherein the nozzle 236 is configured to direct the adhesive toward the surface during the dispense operation. The dispenser controller 240 can control the timing, amount and/or speed of the flow of adhesive onto the structure and/or the optical fiber, for example.

In some implementations, at least one of the dispensers 231, 232, 233 includes a mechanism that dispenses an adhesive tape onto the structure and/or optical fiber. The dispenser controller 240 may be configured to operate the tape dispensing mechanism including, e.g., the amount of adhesive tape dispensed the speed at which the tape is dispensed and/or the timing of dispensing the adhesive tape.

The adhesive controller 240 can activate the dispenser 230 to dispense the first adhesive and the second adhesive substantially simultaneously. Alternatively, the adhesive controller 240 can activate the dispenser 230 to dispense the first and second adhesives at different times. In some scenarios, the adhesive controller 240 controls operation of the adhesive dispenser 230 to dispense the first adhesive at a first time and the second adhesive at a second time, the second time occurring later than the first time.

The dispenser controller 240 may include a dispenser switch 241 that can be activated by an operator to trigger the dispenser controller 240. For example, in one scenario, actuating the dispenser switch 241 can trigger the dispenser controller 240 to operate the adhesive dispenser 230. Actuating the switch 241 may initiate a sequence of dispensing steps, such as dispensing different types of adhesives from different dispensers at different times, rates, and amounts.

In some embodiments, the installation tool 200 may include temperature control device 235 configured to heat and/or cool the adhesive in the dispensers 231. 232. 233 to a predetermined temperature. Heating/cooling the adhesive may facilitate storing and/or dispensing the adhesive. The dispenser controller 240 may control the operation of the temperature control device 235, e.g., using a temperature sensor and feedback control, to maintain the adhesive at a predetermined temperature while the adhesive is in the reservoir 239 of the dispenser and/or while the adhesive is being dispensed. In some implementations, the temperature control device 235 may be thermally coupled to the nozzle 236 and/or the reservoir 239 of the dispenser 230, for example.

The temperature control device 235 may comprise a heater and/or cooler. For example, the heater may comprise a resistive heat source for heating the adhesive. The cooler may comprise a thermoelectric cooler for cooling the adhesive.

Optionally, the installation tool 200 may include a curing device 270 configured to provide curing energy and/or to direct the curing energy toward the adhesive after the adhesive is dispensed. The curing energy may comprise UV radiation, heat, or other type of curing energy for example.

According to some embodiments, the curing device 270 may comprise one or more protective features 277 that protect humans and/or nearby structures from exposure to the curing energy produced by the curing device 270. In one particular embodiment, the curing device 270 is configured to provide UV radiation, and the features 277 are baffles that are substantially opaque to the UV radiation.

The curing device 270 can be controlled by a curing device controller 275 that is configured to activate and deactivate the cure device 270. In some implementations, the curing device controller 275 can be configured to control the dose and/or timing of the curing energy provided by the curing device. For example, the cure device controller 275 can include an adjustable intensity control configured to control the intensity of the curing energy and/or an adjustable timer configured to control the duration of time that the curing energy is provided. The curing device controller 275 may activate the curing device 270 to provide the curing energy at the desired intensity and may automatically deactivate the curing device 270 after the duration of time of the timer expires.

The curing device controller 275 may be configured to activate the curing device 270 in response to a safety condition being met and/or deactivate the curing device 270 in response to a safety condition that is not met. In one example, the installation tool 200 includes a detector 278 configured to detect whether or not the protective features 277 of the curing device are in place. The detector 278 can be coupled to provide a signal to the curing device controller 275; the signal may include information about the position of the protective features 277. For example, if the curing device is a UV lamp, the protection features 277 may be baffles that prevent UV light from escaping from the device and presenting an eye hazard. In this case the detector 278 measures the contact between the baffles and the structure. According to various configurations, when the baffles are not in contact with the structure, the UV lamp cannot be activated, and the lamp will turn off if the baffles lose contact. Based on the detector signal, the cure mechanism controller 275 may activate the curing device 270 when the baffles 277 are in place and/or may deactivate the curing device 270 when the baffles 277 are not in place.

In another example, the installation tool 200 optionally includes a contact detector 223 that detects when the contact portions 221, 222 are in contact with a structure. An interlock 280 is activated or released in response to input from the contact detector 223. For example, the interlock 280 is activated in response to the contact detector 223 detecting that the contact portion 221, 222 is not in contact with a structure and the interlock 280 is released responsive to the contact detector 223 detecting that the contact portion 221, 222 is in contact with a structure. The curing device controller 275 may be operatively coupled with the interlock 280 such that the cure device 270 is activated by the cure device controller 275 only if the interlock 280 is released. According to various configurations, the dispenser controller can be coupled with the contact interlock 280. This may prevent accidentally dispensing adhesive, for example.

In some implementations, the curing device controller 275 may be configured to generate an alert in response to the presence of certain conditions of the installation tool 200. For example, the curing device controller 275 may generate alert in response to the interlock 280 being activated or released; in response to the curing device 270 being activated or deactivated; in response to the protection features 277 being in place or out of place; in response to the cure duration timer timing out; and/or in response to the adhesive reservoir nearing empty, etc. In various implementations, the alert may comprise sound, light, vibration, etc.

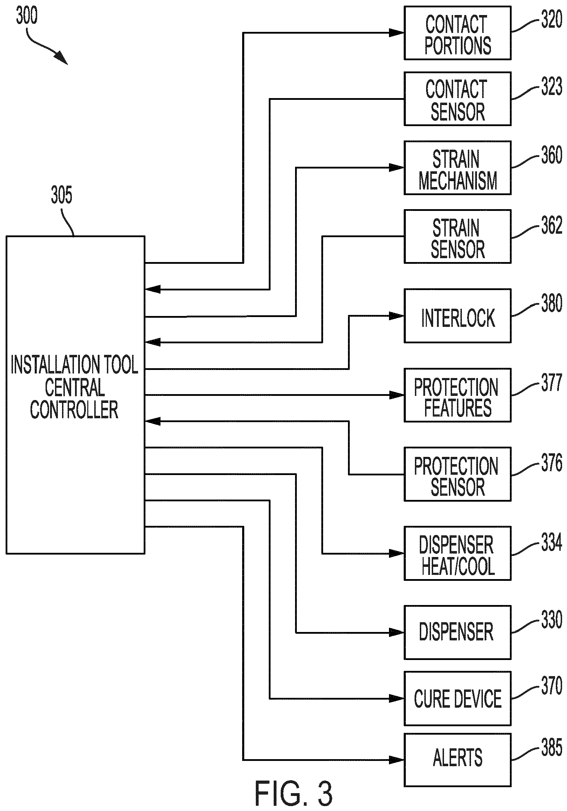

FIG. 3 is a block diagram of an installation tool 300 configured to primarily control the operations of the installation tool automatically. The installation tool 300 includes a central controller 305 that can be configured to control the contact, straining, dispensing, curing, safety, alert, and/or other installation processes.

As previously discussed, the installation tool 300 can optionally include one or more of the following components:
one or more contact portions 320 that can be activated by the central controller 305 to secure or release the optical fiber;
at least one contact detector 323 that provides a signal to the central controller 305 indicating whether or not contact has been made with the structure;
a strain mechanism 360 activated and controlled by the central controller 305 and configured to strain the optical fiber after it is secured by contact portions 320;
a strain sensor 362 configured to provide a strain signal to the central controller, the strain signal indicating the amount of strain in the optical fiber;
an interlock 380 that when activated prevents the cure device 370 from providing curing energy; in some implementations, the interlock 380 may be locked or released by the central controller 305 based on the signal generated by the contact detector 323;
protection features 377 that protect an operator and/or surrounding structures from the curing energy; in some embodiments, the protection features 377 can be deployed or retracted in response to a control signal from the central controller 305;
protection sensor 376 configured to provide a signal to the central controller 305 indicating whether or not the protection features are in place; in some embodiments if the protection features are not in place, the central controller may prevent activation of or deactivate the curing device;
dispenser heater/cooler 334 controlled by the central controller 305 and configured to heat and/or cool the adhesive to a predetermined temperature;
one or more dispensers 330 configured to dispense adhesive; in some embodiments, the location, timing, amount, and/or speed of the dispensing is controlled by the central controller 305;
curing device 370 controlled by the central controller 305 and configured to provide curing energy to the dispensed adhesive; in some embodiments the central controller controls the time, duration, and/or intensity of the curing energy.
alert device 385, e.g., light or speaker, that can be activated by the central controller 305, the alert device configured to provide alerts in response to various conditions of the installation device 300.

The components referenced above can be employed in a partial or fully automated installation process controlled by a central controller. For example, the process can implement an automated process that secures and strain the optical fiber, dispenses one or more types of adhesive, and cures the dispensed adhesive while also providing other functions such as safety assurance. The central controller 305 may be implemented as circuitry such as a microprocessor operating dedicated software, for example.

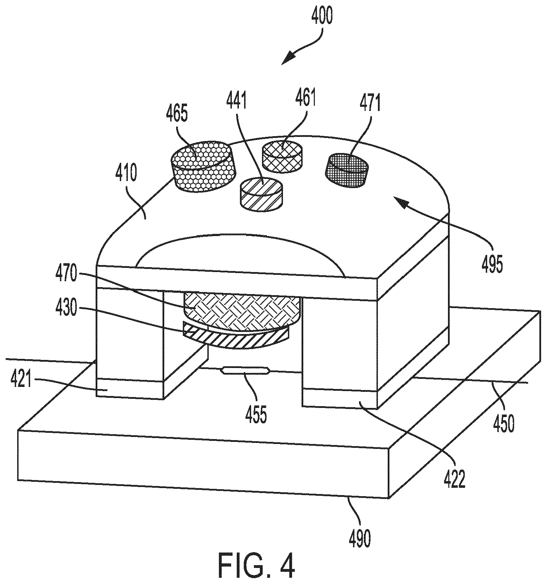

FIG. 4 is a conceptual diagram that provides a perspective view of an installation tool 400 in accordance with some embodiments. The installation tool 400 comprises a body 410 and one or more contact portions 421, 422 supported by the body 410 and configured to secure the optical fiber 450. As shown in FIG. 4, in some implementations, the optical fiber 450 being installed to the structure 490 may include an FO sensor 455. During the installation process, the optical fiber 450 is secured such that the FO sensor 455 is disposed between the contact portions 421, 422.

The installation tool 400 further includes an adhesive dispenser 430 proximate the body 410. The adhesive dispenser 430 is capable of dispensing at least one adhesive. The adhesive dispenser 430 can be configured to dispense adhesive to one or more locations of the optical fiber 450 and/or the structure 490. According to some aspects, the installation tool 400 can be configured such that the adhesive dispenser 430 dispenses the adhesive to the optical fiber 450 and the structure 490 after the optical fiber 450 is secured by the contact portions 421, 422 and is pressed against the structure 490. The adhesive dispenser 430 may be configured to dispense adhesive to multiple locations of the optical fiber 450 and/or structure 490 during the time that the contact portions 422, 422 secure the optical fiber 450.

A dispenser controller (not shown) can be included to control the operation of the adhesive dispenser 430. For example, the dispenser controller may control the timing, type, flow rate, and/or amount of adhesive dispensed to one or multiple locations of the optical fiber 450.

Optionally, the installation device 400 includes a cure device 470 configured to generate a curing energy and to direct the curing energy toward the adhesive dispensed to the optical fiber 450 and the structure 490. In some embodiments, the installation device may implement a fully or partially automated process. In one example, after the installation process is initiated, e.g., by pressing a switch 465 on the body 410, the installation process proceeds with little or no interaction needed by the operator. In another example, the installation process may rely on the operator to initiate certain aspects of the installation process, e.g., by activating one or more switches 465, 461, 471, 441 that trigger one or more installation processes. Optionally, the installation device 400 is a hand-held device that includes a handle 495 configured to allow an operator to grasp the installation device 400.

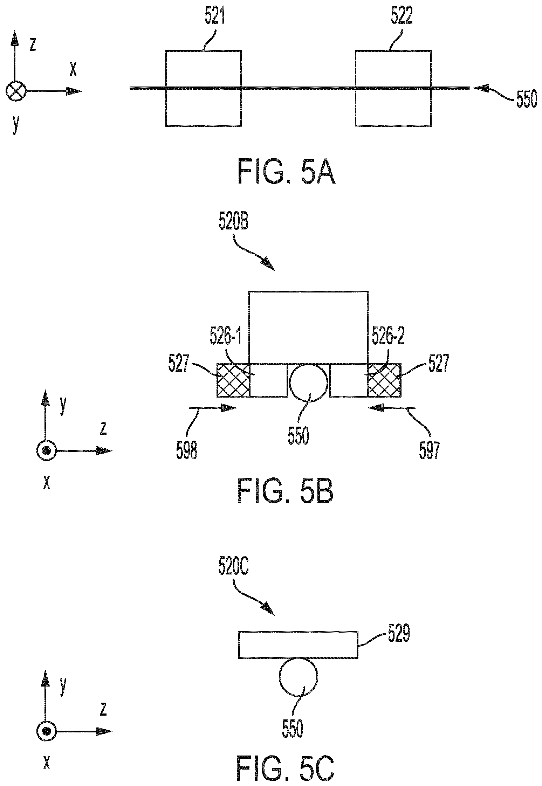

FIG. 5A provides a view of contact portions 521, 522 from the perspective of looking at the installation device from the bottom of the contact portions 521, 522 normal to the surface of the contact portions. The contact portions 521, 522 are shown in relation to an optical fiber 550.

In some embodiments, one or both of the contact portions 520B may comprise a clamp as conceptually illustrated in FIG. 5B. The clamp includes opposing jaws 526-1, 526-2 that are configured to move in opposing directions along the z- axis indicated by arrows 597, 598. When the clamp is activated, the jaws 526 of the clamp move in opposite directions towards one another and secure the optical fiber 550 between the jaws 526. For example, the clamp can include a mechanism 527, e.g., spring loaded or magnet activated mechanism, that moves the jaws toward one another to secure the optical fiber 550.

In some embodiments, one or both of the contact portions 520C may comprise a switchable adhesive 529 as conceptually illustrated in FIG. 5C. The switchable adhesive 529 may be switched to hold or release the optical fiber 550 depending on a switch input. The adhesive may be triggered by a switch input. The switch input for the switchable adhesive can include mechanical, electromagnetic, fluidic, or thermal stimuli, for example.

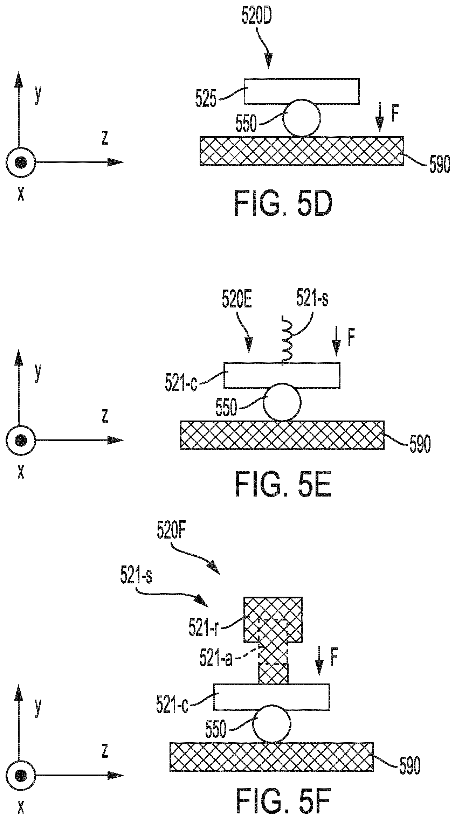

FIGS. 5D through 5F illustrate a contact portions 520D, 520E, 520F that secure an optical fiber 550 by applying sufficient force, F, to the contact portion 520 along the y-axis such that the optical fiber 550 is trapped and secured between the contact portion 520D and the structure 590. FIG. 5D illustrates an embodiment wherein the optical fiber 550 is secured by magnetic force. In implementations wherein the structure 590 comprises a ferrous material, the contact portion 520D may include a magnet 525, such as a rare earth magnet. The magnetic force between magnet 525 of the contact portion 520D and the surface 590 is sufficient to secure the optical fiber 550.

As depicted in FIG. 5E, in some embodiments the optical fiber 550 can be secured to the surface 590 by spring force. The contact portion 520E includes a spring 521-s that applies a force to the contact 521-c of the contact portion 520E. The spring force is sufficient to secure the optical fiber 550 against the surface 590.

Turning now to FIG. 5F, in some embodiments, the optical fiber 550 can be secured by operation of an electromagnetic solenoid 521-s. FIG. 5F illustrates a scenario in which an optical fiber 550 is secured between the surface 590 and a contact 521-c of the contact portion 520F. The optical fiber 550 is secured by a force applied along the y-axis by an electromagnetic solenoid 521-s comprising an electromagnet relay 521-r and an actuator 521-that is moved by the relay 521-r.

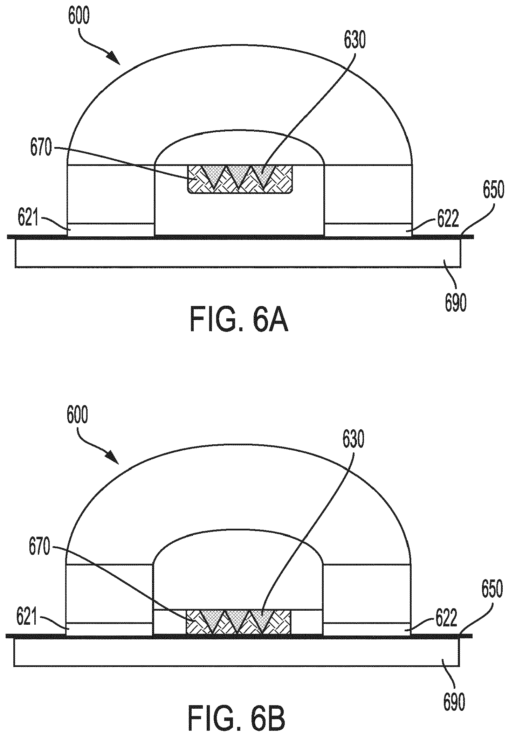

FIGS. 6A and 6B are diagrams that illustrate a process operating the installation tool 600 to dispense adhesive in accordance with some embodiments. FIG. 6A shows the installation tool 600 before the adhesive is dispensed. FIG. 6B is an illustration of the installation tool 600 during dispensing the adhesive. FIGS. 6A and 6B show an optical fiber 650 held in place on a structure 690 by contact portions 621, 622. The installation tool 600 includes a dispenser 630 configured to dispense adhesive, e.g., at three locations along the optical fiber 650. The installation tool 600 optionally comprises a curing device 670 configured to cure the adhesive after the adhesive is dispensed. During the dispensing process, the installation tool 600 may be capable of bringing the adhesive dispenser 630 closer to the surface of the structure 690 for more accurate placement of the adhesive as shown in FIG. 6B. The dispenser 630 can be configured to dispense multiple types of adhesive at multiple different times in some embodiments. In a particular implementation, the installation tool 600 dispenses a first adhesive at first and second locations along the optical fiber and subsequently dispenses a second adhesive at a third location between the first and second locations.

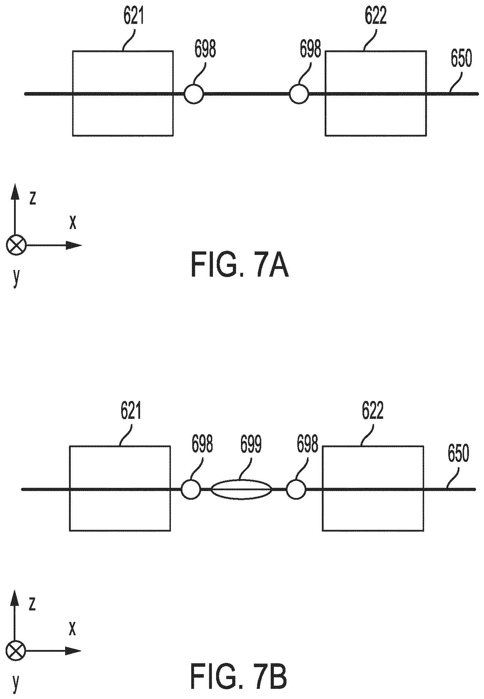

FIGS. 7A and 7B show a view of the installation tool 600 of FIGS. 6A and 6B from the perspective of looking along the y-axis toward the bottom of the contact portions 621, 622. FIGS 7A and 7B also show the optical fiber 650. As depicted in FIG. 7A, in a first step, the adhesive dispenser 630 of the installation tool 600 dispenses a first adhesive 698 at first and second locations of the optical fiber 650 spaced apart along the x axis. Subsequently, as shown in FIG. 7B, the adhesive dispenser 630 dispenses a second adhesive 699 at a third location between the first and second locations. In some embodiments, the first adhesive 698 quickly forms a bond and the second adhesive 699 is a curable adhesive that more slowly forms a bond. The first adhesive 698 may form a temporary bond and the second adhesive 699 may form a longer lasting bond than the first adhesive 698.

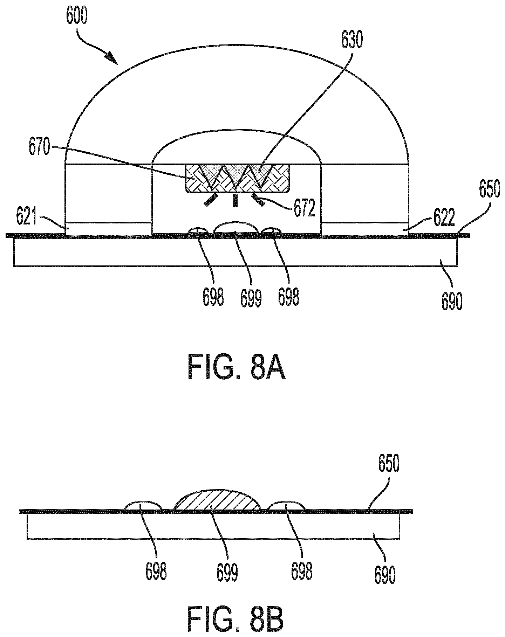

Some of all of the adhesives dispensed may be curable by a curing energy provided by a curing device 670 of the installation tool 600 of FIGS. 6A and 6B. In the example depicted in FIGS. 8A and 8B, the installation tool 600 has dispensed a first adhesive 698 and a second adhesive 699 wherein the first adhesive is a curable adhesive. After the adhesives 698, 699 have been dispensed onto the optical fiber 650 and the surface 690, the curing device 670 is activated to provide curing energy 672, e.g., UV radiation. The curing energy 672 is provided in a sufficient dose (time and intensity) to cure the second adhesive 699. After the curing energy is provided, the installation tool 600 may be removed, e.g., moved to another position on the structure. FIG. 8B shows the optical fiber 650 bonded to the structure 690 by the first and second adhesives 698. 699 after the second adhesive 699 has been cured.

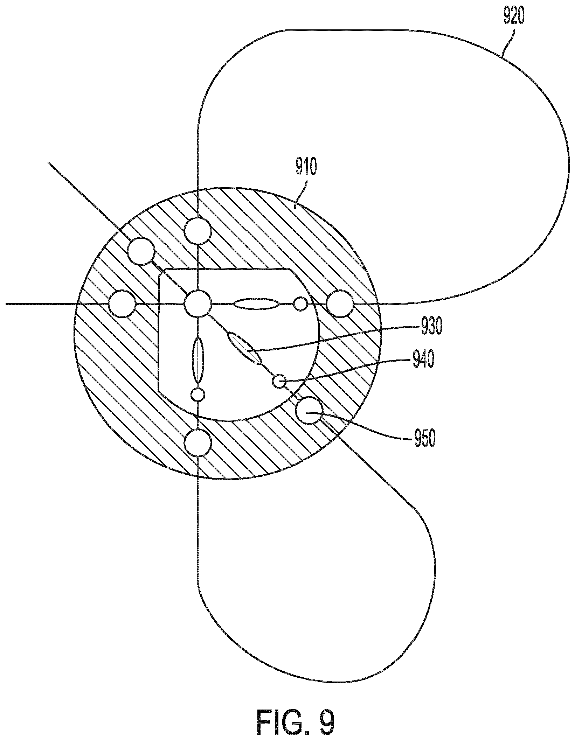

FIG. 9 shows a configuration of the installation tool 910 from the perspective of looking at the installation device from the bottom of the contact portions in accordance with embodiments described herein. In this configuration, the arrangement of the contact portions 950, the first adhesive-applying points 940, and the second adhesive-applying points is different from previous embodiments. This configuration will enable easy installation of a fiber optics strain rosette which includes three fiber optics sensors 930 (e.g., FBGs) aligned at different angles in a plane.

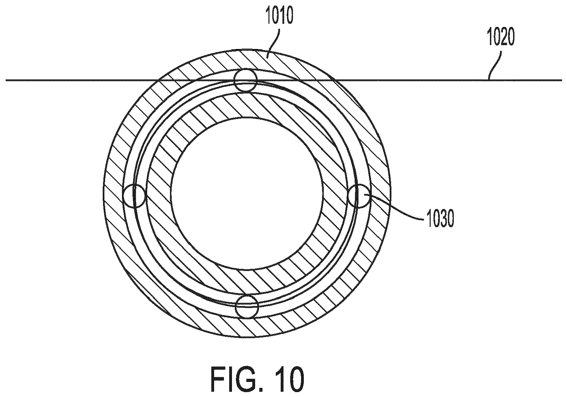

FIG. 10 shows another configuration of the installation tool 1010 from the perspective of looking at the installation device from the bottom of the contact portions. This configuration can hold a long piece of fiber 1020 in a spool with multiple contact portions 1030, position the spool onto the structure surface, and apply adhesives to one or more points on the spool to secure the spool onto the structure surface. This configuration will ease handling of long fiber segment with no sensing points during the install. This design may benefit when adapting a general sensing fiber design to structures with various feature sizes.

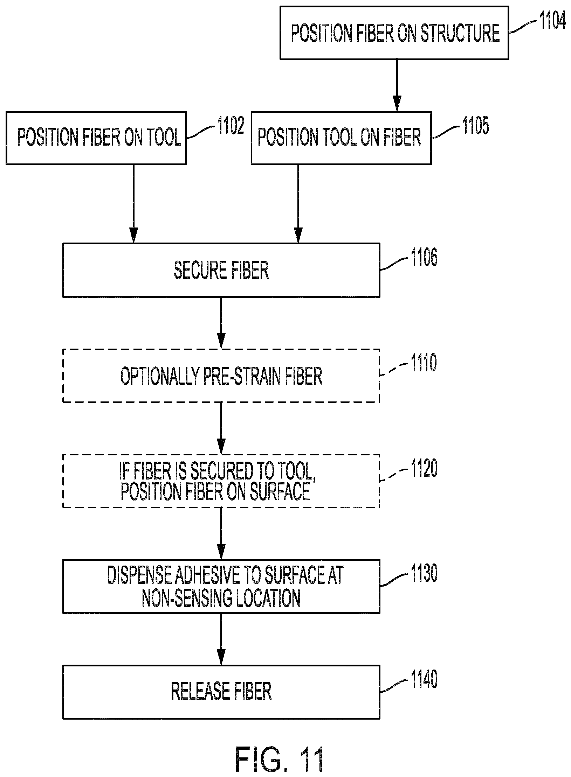

According to some embodiments, the installation tool can be used to secure optical fibers that do not include FO sensors. FIG. 11 is a flow diagram illustrating a process for installing an optical fiber onto a structure in accordance with some embodiments. According to some aspects, the optical fiber can be positioned 1102 on the installation tool and secured 1106 by the contact portion of the installation tool, e.g., by a clamp or switchable adhesive as previously discussed in connection with FIGS. 5B and 5C. According to some aspects, the optical fiber can be positioned on the structure 1104 followed by positioning the installation tool on the fiber and structure 1105. The optical fiber is secured 1106 between the contact portion of the installation tool and the structure, e.g., by biasing the contact portion against the structure by solenoid, magnet, or spring as previously discussed in connection with FIGS. 5D through 5F. Optionally, the optical fiber can be pre-strained 1110 to a predetermined pre-strain value. Subsequently the installation tool is positioned 1120 on the structure. The optical fiber is secured 1130 to the structure, e.g., using a fast-bonding adhesive, and the optical fiber is released 1140 by the installation tool.

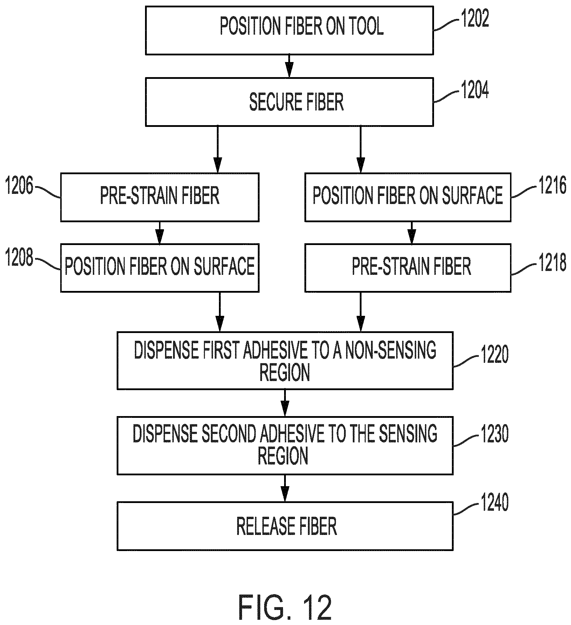

According to some embodiments, the installation tool can be used to secure optical fibers that include sensing points comprising FO sensors. FIG. 12 is a flow diagram illustrating a process for installing an optical fiber comprising an FO sensor onto a structure in accordance with some embodiments. The process involves positioning 1202 the optical fiber onto an installation tool and securing 1204 the fiber to the installation tool. After the fiber is secured to the tool, two optional sub-processes are available. According to one optional sub-process the optical fiber is first pre-strained 1206 and is subsequently positioned 1208 on the structure. According to another optional sub-process, the optical fiber is first positioned 1216 on the structure and is subsequently pre-strained 1218.

After the optical fiber is pre-strained by one of the sub-processes discussed above, the optical fiber is fixed 1220 to the structure at one or more non-sensing locations by a first adhesive. A second adhesive is applied 1230 at a sensing location. The first adhesive applied at the non-sensing location is relatively fast-bonding when compared to the second adhesive which is a relatively slow-bonding adhesive. According to some implementations, the second adhesive may form a more lasting, substantially permanent bond when compared to the first adhesive. After the second adhesive is applied, the optical fiber is released 1240.

Referring to the processes outlined in FIGS. 11 and 12, securing the optical fiber may involve securing the optical fiber with a switchable clamp and/or a switchable adhesive, for example. In various implementations, dispensing the first and/or second adhesives may comprise dispensing an adhesive tape, a flowable adhesive and a curable adhesive. According to some implementations, the first and second adhesive can be dispensed substantially simultaneously. Alternatively, the first adhesive can be dispensed at a first time and the second adhesive can be dispensed at a second time different from the first time. Dispensing the first and second adhesives can involve dispensing the first adhesive at a first location and a second location along the optical fiber and dispensing the second adhesive at a third location along the optical fiber that is between the first location and the second location.

The temperature of one or both of the first and second adhesive can be controlled before and/or during dispensing. A predetermined temperature of the adhesive can be achieved by one or both of heating and cooling the adhesive.

In embodiments that involve dispensing a curable adhesive, the process may further involve activating a curing device that directs curing energy toward the curable adhesive. Activation of the curing device can include setting an adjustable timer to a period of curing time wherein the curing device is automatically deactivated after the period of curing time has expired.

Activation of the curing device may be prevented in response to a safety condition not being met. For example, activating the curing device may be prevented or the curing device may be deactivated if an interlock is locked. For example, the interlock may be locked in response to no or low force applied to the contact regions. The interlock may be unlocked in response to detection of a force applied to the contact portions when the detected force is above a predetermined force threshold indicating that the contact portions are in contact with the surface, for example.

The curing device may be automatically prevented from activating or may be deactivated if a safety condition has been violated. For example, the curing device may be prevented from activating or may be deactivated if protective features such as opaque baffles that prevent radiation exposure are not in place.

As discussed above the installation tool can accommodate for several installation modes. For example, one installation mode involves installing the fiber at specific points in a fast manner (cure/fix within minutes). The first installation mode can use a fast curing epoxy, a UV curable glue, and/or an adhesive tape, for example. The first installation can be used to fix two or more points on the fiber that closely sandwich a sensing point comprising an FO sensor on the fiber. The FO sensor is held in place after the optical fiber is released from the installation tool. The first installation mode can also be used to fix bare optical fiber to the structure surface to secure fiber segments between two sensing points that are spaced apart on the same optical fiber. The second installation mode installs the sensing point to the structure surface, e.g., using an epoxy, UV glue, etc., which doesn't apply additional strain to the FO sensor while curing. The adhesive in the second mode can cure in a slower speed in order to reduce the curing-induced strain.

An FO sensor can be first positioned by fixing two adjacent points to the surface of the structure using the first installation mode and then further secured by the second installation mode. Once the glue is applied to the sensing point comprising the FO sensor, the contact portions can be switched off to release the mounted optical fiber segment from the installation tool. The glue on the sensing point can gradually cure after the optical fiber is released from the installation tool since the sensing point is held in place by two fixed points. Operators can move on to next installation site with the installation tool after releasing the fiber from the installation tool.

It is useful to have the bonding mechanism integrated with the installation tool instead of having separate parts for securing and bonding. For example, the integrated approach can provide controlled bonding positions, controlled amount of glue dispensed, and single operator operation. If UV glue is used, a UV source can be integrated with the installation tool, which will expose each UV bonding site identically, since the relative position of the light source with respect to the the bonding site is fixed by the body of the installation tool.

To provide that substantially the same amount of glue is dispensed on each bonding point, the installation tool may accommodate for different installation temperatures. In some embodiments, a heaters and/or coolers be integrated on the nozzles of the adhesive dispenser to keep the dispenser at substantially constant temperature during the dispensing operation.

The installation tool can mount FO sensors onto surfaces of structures with defined pre-strain and takes a multi-step mounting approach to reduce unwanted strain on the FO sensor while not reducing installation efficiency. The installation tool can be used to install FO sensor in field test, mounting optical fibers on various kinds of surfaces. The installation tool can ease optical fiber installation by providing a stamp-like procedure that can be done by a single operator, reduce subjective variables, and accommodate difficult installation requirements such as mounting optical fiber overhead of the operator. In specific conditions where the structure to be monitored should not be in contact with the operator, the proposed tool will act as an intermediate and help enhance field safety.

Although the subject matter has been described in language specific to structural features and/or methodological acts, it is to be understood that the subject matter defined in the appended claims is not necessarily limited to the specific features or acts described above. Rather, the specific features and acts described above are disclosed as representative forms of implementing the claims.

## Claims

1. An apparatus, comprising:
an installation tool (100; 200; 300; 400; 600; 910; 1010) for attaching an optical fiber (150; 450; 550; 650; 1020) to a structure (190; 490; 590; 690; 1105), the tool comprising:
a body (110; 410);
one or more contact portions (121, 122; 221, 222; 320; 421, 422; 521, 522; 520C; 520D, 520E, 520F; 621, 622; 1030) supported by the body and configured to secure the optical fiber;
an adhesive dispenser (130; 230; 231, 232, 233; 430; 630) proximate the body, the adhesive dispenser configured to dispense at least one adhesive to the optical fiber and the structure;
a dispenser controller (140; 240) operatively coupled to the adhesive dispenser, the dispenser controller configured to control the adhesive dispenser; and
a strain mechanism (260; 360) configured to pre-strain the optical fiber to a first predetermined pre-strain value,
wherein the strain mechanism is configured to move one or both of the contact portions along an x-axis of the tool to impart a pre-determined amount of pre-strain to the optical fiber to the first predetermined pre-strain value, wherein said x-axis extends along the length of the optical fiber.

2. The apparatus of claim 1, wherein the contact portions (121, 122; 221, 222; 320; 421, 422; 521, 522; 520C; 520D, 520E, 520F; 621, 622; 1030) comprise at least one clamp, optionally wherein:
the contact portions comprise switchable contact portions that are switchable between a first state that secures the optical fiber (150; 450; 550; 650; 1020) and a second state that releases the optical fiber; and
further comprising a contact switch (265) configured to switch the switchable contact portions between the first and second states, and further optionally wherein the switchable contact portions comprise one or both of electromagnets and springs; or
wherein the switchable contact portions comprise a switchable adhesive.

3. The apparatus of claim 1, wherein:
the adhesive is a curable adhesive; and
further comprising:
a curing device (270; 370; 670) configured to provide a curing energy directed toward the curable adhesive after the curable adhesive is dispensed; and
a curing device controller (275) coupled to the curing device.

4. The apparatus of claim 3, wherein the curing energy is ultraviolet radiation.

5. The apparatus of claim 3, wherein the curing device controller (275) is configured to activate the curing device (270; 370; 670) to provide the curing energy in response to a safety condition being met.

6. The apparatus of claim 3, further comprising an interlock wherein the curing device controller (275) is configured to prevent activation or deactivate the curing device (270; 370; 670) in response to a state of an interlock (280).

7. The apparatus of claim 3, wherein:
the curing device controller (275) comprises an adjustable timer configured to set a curing time period; and
the curing device controller is configured to automatically deactivate the curing device (270; 370; 670) when the curing time period has expired.

8. The apparatus of claim 1, wherein the adhesive dispenser (130; 230; 231, 232, 233; 430; 630) is configured to dispense:
a first adhesive configured to form a fast bond between the optical fiber (150; 450; 550; 650; 1020) and the structure (190; 490; 590; 690; 1105); and
a second adhesive configured to form a slow bond between the optical fiber and the structure.

9. The apparatus of claim 1, wherein the adhesive dispenser (130; 230; 231, 232, 233; 430; 630) includes a temperature control device configured to control temperature of the adhesive.

10. A method of operating an optical fiber installation tool (100; 200; 300; 400; 600; 910; 1010), the tool comprising a strain mechanism (260; 360) configured to pre-strain an optical fiber (150; 450; 550; 650; 1020) to a first predetermined pre-strain value, the method comprising:
securing an optical fiber between two contact portions (121, 122; 221, 222; 320; 421, 422; 521, 522; 520C; 520D, 520E, 520F; 621, 622; 1030) of the installation tool;
using the strain mechanism to move one or both of the two contact portions along an x-axis of the tool to impart a pre-determined amount of pre-strain to the optical fiber to the first predetermined pre-strain value, wherein said x-axis extends along the length of the optical fiber;
dispensing a first adhesive to one or more locations on the optical fiber; and
dispensing a second adhesive to at least one location on the optical fiber, wherein the first adhesive is relatively fast-bonding compared to the second adhesive.

11. The method of claim 10, wherein the securing the optical fiber (150; 450; 550; 650; 1020) comprises securing the optical fiber with a switchable clamp or a switchable adhesive.

12. The method of claim 10, wherein dispensing at least one of the first adhesive and the second adhesive comprises:
dispensing a curable adhesive; and
after the curable adhesive is dispensed, activating a curing device (270; 370; 670) that directs curing energy directed toward the curable adhesive.

13. The method of claim 12, activating the curing device (270; 370; 670) comprises:
preventing activation or deactivating the curing device in response to a safety condition not being met; or
setting a timer indicating a period of curing time and deactivating the curing device (270; 370; 670) after the period of curing time has expired.

14. The method of claim 10, further comprising controlling a temperature of at least one of the first and second adhesive.

## Patentansprüche

1. Vorrichtung, umfassend:
ein Installationswerkzeug (100; 200; 300; 400; 600; 910; 1010) zum Befestigen einer optischen Faser (150; 450; 550; 650; 1020) an einer Struktur (190; 490; 590; 690; 1105), wobei das Werkzeug umfasst:
einen Körper (110; 410);
einen oder mehrere Kontaktabschnitte (121, 122; 221, 222; 320; 421, 422; 521, 522; 520C; 520D, 520E, 520F; 621, 622; 1030), gestützt vom Körper und ausgebildet zum Fixieren der optischen Faser;
ein Klebstoff-Auftragsgerät (130; 230; 231, 232, 233; 430; 630) in der Nähe des Körpers, wobei das Klebstoff-Auftragsgerät zum Auftragen von wenigstens einem Klebstoff an der optischen Faser und der Struktur ausgebildet ist,
ein Auftragsgerät-Steuergerät (140; 240), wirksam gekoppelt mit dem Klebstoff-Auftragsgerät, wobei das Auftragsgerät-Steuergerät zum Steuern des Klebstoff-Auftragsgeräts ausgebildet ist; und
einen Spannmechanismus (260; 360), ausgebildet zum Vorspannen der optischen Faser auf einen ersten vorbestimmten Vorspannwert,
wobei der Spannmechanismus zum Bewegen von einem oder beiden Kontaktabschnitten entlang einer x-Achse des Werkzeugs ausgebildet ist, um einen vorbestimmten Betrag der Vorspannung auf die optische Faser bis zum ersten vorbestimmten Vorspannwert zu übertragen, wobei sich die x-Achse entlang der Länge der optischen Faser erstreckt.

2. Vorrichtung nach Anspruch 1, wobei die Kontaktabschnitte (121, 122; 221, 222; 320; 421, 422; 521, 522; 520C; 520D, 520E, 520F; 621, 622; 1030) wenigstens eine Klemme umfassen, wobei optional:
die Kontaktabschnitte schaltbare Kontaktabschnitte umfassen, die zwischen einem ersten Zustand, der die optische Faser (150; 450; 550; 650; 1020) fixiert, und einem zweiten Zustand, der die optische Faser löst, schaltbar sind; und
ferner umfassend einen Kontaktschalter (265), ausgebildet zum Schalten der schaltbaren Kontaktabschnitte zwischen erstem und zweitem Zustand und wobei ferner optional die schaltbaren Kontaktabschnitte Elektromagnete und/oder Federn umfassen; oder
wobei die schaltbaren Kontaktabschnitte einen schaltbaren Klebstoff umfassen.

3. Vorrichtung nach Anspruch 1, wobei:
der Klebstoff ein aushärtbarer Klebstoff ist; und
ferner umfassend:
eine Aushärtvorrichtung (270; 370; 670), ausgebildet zum Liefern einer zum aushärtbaren Klebstoff gerichteten Aushärtenergie, nachdem der aushärtbare Klebstoff aufgetragen wurde; und ein mit der Aushärtvorrichtung gekoppeltes Aushärtvorrichtungs-Steuergerät (275).

4. Vorrichtung nach Anspruch 3, wobei die Aushärtenergie UV-Strahlung ist.

5. Vorrichtung nach Anspruch 3, wobei das Aushärtvorrichtungs-Steuergerät (275) zum Aktivieren der Aushärtvorrichtung (270; 370; 670) ausgebildet ist, um die Aushärtenergie als Reaktion auf eine erfüllte Sicherheitsbedingung zu liefern.

6. Vorrichtung nach Anspruch 3, ferner umfassend eine Verriegelung, wobei das Aushärtvorrichtungs-Steuergerät (275) ausgebildet ist, die Aushärtvorrichtung (270; 370; 670) als Reaktion auf einen Zustand einer Verriegelung (280) zu aktivieren oder deaktivieren.

7. Vorrichtung nach Anspruch 3, wobei:
das Aushärtvorrichtungs-Steuergerät (275) einen zum Festlegen eines Aushärtzeitraums ausgebildeten einstellbaren Zeitgeber umfasst; und
das Aushärtvorrichtungs-Steuergerät zum automatischen Deaktivieren der Aushärtvorrichtung (270; 370; 670) ausgebildet ist, wenn der Aushärtzeitraum abgelaufen ist.

8. Vorrichtung nach Anspruch 1, wobei das Klebstoff-Auftragsgerät (130; 230; 231, 232, 233; 430; 630) ausgebildet ist aufzutragen:
einen ersten Klebstoff, ausgebildet zum Bilden einer schnellen Verbindung zwischen der optischen Faser (150; 450; 550; 650; 1020) und der Struktur (190; 490; 590; 690; 1105); und
einen zweiten Klebstoff, ausgebildet zum Bilden einer langsamen Verbindung zwischen der optischen Faser und der Struktur.

9. Vorrichtung nach Anspruch 1, wobei das Klebstoff-Auftragsgerät (130; 230; 231, 232, 233; 430; 630) eine Temperatursteuervorrichtung umfasst, ausgebildet zum Steuern der Temperatur des Klebstoffs.

10. Verfahren zum Betreiben eines Installationswerkzeugs (100; 200; 300; 400; 600; 910; 1010) für optische Fasern, wobei das Werkzeug einen Spannmechanismus (260; 360) umfasst, ausgebildet zum Vorspannen einer optischen Faser (150; 450; 550; 650; 1020) auf einen ersten vorbestimmten Vorspannwert, wobei das Verfahren umfasst:
Fixieren einer optischen Faser zwischen zwei Kontaktabschnitten (121, 122; 221, 222; 320; 421, 422; 521, 522; 520C; 520D, 520E, 520F; 621, 622; 1030) des Installationswerkzeugs;
Verwenden des Spannmechanismus zum Bewegen von einem oder beiden der zwei Kontaktabschnitte entlang einer x-Achse des Werkzeugs, um einen vorbestimmten Betrag der Vorspannung auf die optische Faser bis zum ersten vorbestimmten Vorspannwert zu übertragen, wobei sich die x-Achse entlang der Länge der optischen Faser erstreckt;
Auftragen eines ersten Klebstoffs an einer oder mehreren Stellen auf der optischen Faser; und
Auftragen eines zweiten Klebstoffs an wenigstens einer Stelle auf der optischen Faser, wobei der erste Klebstoff relativ schnell verbindend ist im Vergleich zum zweiten Klebstoff.

11. Verfahren nach Anspruch 10, wobei das Fixieren der optischen Faser (150; 450; 550; 650; 1020) das Fixieren der optischen Faser mit einer schaltbaren Klemme oder einem schaltbaren Klebstoff umfasst.

12. Verfahren nach Anspruch 10, wobei das Auftragen von erstem Klebstoff und/oder zweitem Klebstoff umfasst:
Auftragen eines aushärtbaren Klebstoffs; und
nachdem der aushärtbare Klebstoff aufgetragen ist, Aktivieren einer Aushärtvorrichtung (270; 370; 670), die zum aushärtbaren Klebstoff gerichtete Aushärtenergie richtet.

13. Verfahren nach Anspruch 12, wobei das Aktivieren der Aushärtvorrichtung (270; 370; 670) umfasst:
Verhindern des Aktivierens oder Deaktivierens der Aushärtvorrichtung als Reaktion auf eine nicht erfüllte Sicherheitsbedingung; oder
Festlegen eines Zeitgebers zur Angabe eines Zeitraums einer Aushärtzeit und Deaktivieren der Aushärtvorrichtung (270; 370; 670), nachdem der Zeitraum der Aushärtzeit abgelaufen ist.

14. Verfahren nach Anspruch 10, ferner umfassend das Steuern einer Temperatur des ersten und/oder zweiten Klebstoffs.

## Revendications

1. Appareil, comprenant :
un outil d'installation (100; 200; 300; 400; 600; 910; 1010) destiné à fixer une fibre optique (150; 450; 550; 650; 1020) contre une structure (190; 490; 590; 690; 1105), l'outil comprenant :
un corps (110; 410);
une ou plusieurs parties de contact (121, 122; 221, 222; 320; 421, 422; 521, 522; 520C; 520D; 520E; 520F; 621, 622; 1030) soutenues par le corps et configurées pour sécuriser la fibre optique;
un distributeur d'adhésif (130; 230; 231, 232, 233; 430; 630) à proximité du corps, le distributeur d'adhésif configuré pour distribuer au moins un adhésif vers la fibre optique et la structure;
un dispositif de commande de distributeur (140; 240) couplé de façon opérationnelle avec le distributeur d'adhésif, le dispositif de commande de distributeur configuré pour commander le distributeur d'adhésif; et
un mécanisme de contrainte (260; 360) configuré pour précontraindre la fibre optique à une première valeur de précontrainte prédéterminée,
dans lequel le mécanisme de contrainte est configuré pour déplacer l'une ou les deux parmi des parties de contact le long d'un axe x de l'outil afin de transmettre une quantité prédéterminée de précontrainte de la fibre optique à la première valeur de précontrainte prédéterminée, dans lequel ledit axe x s'étend le long de la longueur de la fibre optique.

2. Appareil selon la revendication 1, dans lequel les parties de contact (121, 122; 221, 222; 320; 421, 422; 521, 522; 520C; 520D; 520E; 520F; 621, 622; 1030) comprennent au moins une pince, optionnellement dans lequel :
les parties de contact comprennent des parties de contact commutables qui peuvent être commutées entre un premier état qui sécurise la fibre optique (150; 450; 550; 650; 1020) et un second état qui libère la fibre optique; et
comprenant en outre un commutateur de contact (265) configuré pour commuter les parties de contact commutables entre les premier et second états, et en outre optionnellement dans lequel les parties de contact commutables comprennent l'un ou les deux parmi des électroaimants et des ressorts; ou
dans lequel les parties de contact commutables comprennent un adhésif commutable.

3. Appareil selon la revendication 1, dans lequel :
l'adhésif est un adhésif durcissable; et
comprenant en outre :
un dispositif de durcissement (270; 370; 670) configuré pour fournir une énergie de durcissement dirigée vers l'adhésif durcissable après que l'adhésif durcissable a été distribué; et
un dispositif de commande de dispositif de durcissement (275) couplé avec le dispositif de durcissement.

4. Appareil selon la revendication 3, dans lequel l'énergie de durcissement est un rayonnement ultraviolet.

5. Appareil selon la revendication 3, dans lequel le dispositif de commande de dispositif de durcissement (275) est configuré pour activer le dispositif de durcissement (270; 370; 670) afin de fournir l'énergie de durcissement en réponse au fait qu'une condition de sécurité est satisfaite.

6. Appareil selon la revendication 3, comprenant en outre un dispositif d'interverrouillage dans lequel le dispositif de commande de dispositif de durcissement (275) est configuré pour empêcher une activation ou désactiver le dispositif de durcissement (270; 370; 670) en réponse à un état d'un dispositif d'interverrouillage (280).

7. Appareil selon la revendication 3, dans lequel :
le dispositif de commande de dispositif de durcissement (275) comprend une minuterie ajustable configurée pour régler une période de temps de durcissement; et
le dispositif de commande de dispositif de durcissement est configuré pour désactiver automatiquement le dispositif de durcissement (270; 370; 670) lorsque la période de temps de durcissement a expiré.

8. Appareil selon la revendication 1, dans lequel le distributeur d'adhésif (130; 230; 231, 232, 233; 430; 630) est configuré pour distribuer :
un premier adhésif configuré pour former un collage rapide entre la fibre optique (150; 450; 550; 650; 1020) et la structure (190; 490; 590; 690; 1105); et
un second adhésif configuré pour former un collage lent entre la fibre optique et la structure.

9. Appareil selon la revendication 1, dans lequel le distributeur d'adhésif (130; 230; 231, 232, 233; 430; 630) inclut un dispositif de commande de température configuré pour commander une température de l'adhésif.

10. Procédé d'exploitation d'un outil d'installation (100; 200; 300; 400; 600; 910; 1010) de fibre optique, l'outil comprenant un mécanisme de contrainte (260; 360) configuré pour précontraindre une fibre optique (150; 450; 550; 650; 1020) à une première valeur de précontrainte prédéterminée, le procédé comprenant :
la sécurisation d'une fibre optique entre deux parties de contact (121, 122; 221, 222; 320; 421, 422; 521, 522; 520C; 520D; 520E; 520F; 621, 622; 1030) de l'outil d'installation;
l'utilisation du mécanisme de contrainte pour déplacer l'une ou les deux parmi les deux parties de contact le long d'un axe x de l'outil afin de transmettre une quantité prédéterminée de précontrainte de la fibre optique à la première valeur de précontrainte prédéterminée, dans lequel ledit axe x s'étend le long de la longueur de la fibre optique;
la distribution d'un premier adhésif vers un ou plusieurs emplacements sur la fibre optique; et
la distribution d'un second adhésif vers au moins un emplacement sur la fibre optique, dans lequel le premier adhésif est un collage relativement rapide comparé au second adhésif.

11. Procédé selon la revendication 10, dans lequel la sécurisation de la fibre optique (150; 450; 550; 650; 1020) comprend la sécurisation de la fibre optique avec une pince commutable ou un adhésif commutable.

12. Procédé selon la revendication 10, dans lequel la distribution d'au moins l'un parmi le premier adhésif et le second adhésif comprend :
la distribution d'un adhésif durcissable; et
après que l'adhésif durcissable a été distribué, l'activation d'un dispositif de durcissement (270; 370; 670) qui dirige une énergie de durcissement dirigée vers l'adhésif durcissable.

13. Procédé selon la revendication 12, l'activation du dispositif de durcissement (270; 370; 670) comprend :
le fait d'empêcher une activation ou une désactivation du dispositif de durcissement en réponse au fait qu'une condition de sécurité n'est pas satisfaite; ou
le réglage d'une minuterie indiquant une période de temps de durcissement et la désactivation du dispositif de durcissement (270; 370; 670) après que la période de temps de durcissement a expiré.

14. Procédé selon la revendication 10, comprenant en outre le fait de commander une température d'au moins l'un parmi le premier et le second adhésif.
